# EUROPEAN PATENT SPECIFICATION

(11) **EP 1 533 229 B1**
(45) Date of publication and mention of the grant of the patent: **06.09.2006**
(21) Application number: 04425850.7
(22) Date of filing: 15.11.2004
(51) Int. Cl.: B64F 1/36, B64F 1/00

(54) **Movable loading system, preferably for loading containers on airplanes**
Bewegliches Ladungssystem, vorzugsweise für die Containerladung auf Flugzeugen
Système mobile de chargement, de préférence pour le chargement de conteneurs sur des avions

(30) Priority: 19.11.2003 IT RM20030543
(43) Date of publication of application: 25.05.2005
(73) Proprietor: Rampini Carlo S.p.A., 06065 Passignano sul Trasimeno (PG) (IT)
(72) Inventor: Rampini, Franco Rampini Carlo S.p.A., 06065 Passignano sul Trasimeno (PG) (IT); Rampini, Stefano Rampini Carlo S.p.A., 06065 Passignano sul Trasimeno (PG) (IT)
(74) Representative: Iannone, Carlo Luigi

(56) References cited:
- DE-A1- 4 040 913
- FR-A- 2 567 083
- GB-A- 2 053 157
- US-A- 3 972 427
- US-A- 4 304 518

## Description

The present invention relates to a movable loading system, preferably for loading containers on airplanes.

More specifically, the invention concerns a movable loading system, studied and realised particularly for loading container within aircraft strive in military airports, but that can be used in any situation when it is necessary carrying out loading and/or unloading operations in inconvenient conditions.

In the following the specification will be addressed to the application of the device to the loading operation for holds of aircrafts, but it is well evident that it must not be considered limited to this specific use.

As it is well known, at present, for loading and unloading containers in airports and harbours, suitable lifting means are provided. Particularly, systems with hydraulic means are used providing the lifting and introduction of the container within the holds. For example, trucks are present providing the hooking of said container, transportation and storing of the same within a hold by hydraulic arms. Means provided with cabin and mechanical arms are also present.

If military airports or inconvenient places are taken into consideration, these kinds of equipments are not present. Thus, difficulties are encountered in these cases for loading and unloading containers from, or in, aircrafts.

At present, it is possible solving this kind of problems by the transportation of standard loading and unloading equipments within the aircraft hold. This solution has some drawbacks. Above-mentioned equipments reduce the goods that can be loaded within the hold of the aircraft. Furthermore, they are very heavy. Thus they cannot be easily transported or used. Finally, specialised personnel are required for handling the same equipments.

It is well evident that this procedure is not convenient also under the economical point of view. Further, it cannot be used at all in some circumstances.

In view of the above, it is well evident the needing of having available a device as that suggested by the present invention, that can be transported along with the goods, and that allows to save space within the holds of the aircrafts.

Much better would be having available a device providing all the means necessary to the completion of the loading and unloading operations.

In this context it is included the solution suggested according to the present invention.

Object of the present invention is therefore that of providing a device allowing all the loading and unloading operations for containers from and on aircrafts, and that can be easily transported.

Another object of the invention is that of providing on the above device means suitable for it motion.

Further object of the present invention is that of providing the instruments necessary to the execution of the method and the apparatuses carrying out said method.

It is therefore specific object of the present invention a movable loading system, preferably for loading containers on aircrafts, characterised in that it comprises at least a lifting device having a resting base and upper sliding means; motion means, provided with removable coupling means; and means for the stabilisation of the position of said container, said position stabilisation means being provided with means for coupling with said container; and in that, during the transportation of said movable loading system, said lifting device and said motion means are coupled each other by said removable coupling means, provided on said motion means, while during the container loading phase, said lifting device and said motion means are separated, and said motion means are coupled by said coupling means to said position stabilisation means; said lifting device being provided under said container, acting as a support, facilitating the introduction of said container within a loading space, lifting and/or making it sliding along said sliding means.

Always according to the invention, said sliding means can be comprised of a roll.

Still according to the invention, said lifting device can comprise wheels, preferably retractable wheels.

Furthermore, according to the invention, said lifting device can comprise a jack, provided with an operation lever, and mechanical means.

Still according to the invention, said motion means can comprise wheels.

Always according to the invention, said motion means can comprise means for controlling the direction, said direction control means being eventually provided with at least a bumper.

Preferably, according to the invention, said direction control means can comprise steering axes, provided with a worm screw and at least a screw, to fix the steering angle.

Furthermore, according to the invention, said steering axes can comprise a motion wrench, suitable to control the steering angle, said wrench comprising a screw coupling and a handle.

Still according to the invention, said position stabilisation means can comprise lifting means such as a cylinder - piston device.

The present invention will be now described, for illustrative but not limitative purposes, according to its preferred embodiments, with particular reference to the figures of the enclosed drawings, wherein:
Figure 1 shows a lateral view of a loading system according to the present invention;
Figure 2a shows a front view of a lifting device of the loading system of figure 1;
Figure 2b shows a lateral view of the lifting device of figure 2a;
Figure 3 shows a top view of a steering axis of the loading system of figure 1;
Figure 4 shows a wrench with screw coupling for the steering axis of figure 3;
Figure 5a is a lateral view of the loading system of figure 1, during the first phase of loading a container within an aircraft hold;
Figure 5b is a top view of the loading system of figure 1, during the first loading phase of a container within a hold of an aircraft;
Figure 6 is a lateral view of the loading system of figure 1, during the second loading phase of a container within a hold of an aircraft;
Figure 7 is a lateral view of the loading system of figure 1, during the third loading phase of a container within a hold of an aircraft;
Figure 8 is a lateral view of the loading system of figure 1, during the fourth loading phase of a container within a hold of an aircraft;
Figure 9 is a lateral view of the loading system of figure 1, during the fifth loading phase of a container within a hold of an aircraft; and
Figure 10 is a lateral view of the loading system of figure 1, during the sixth loading phase of a container within a hold of an aircraft.

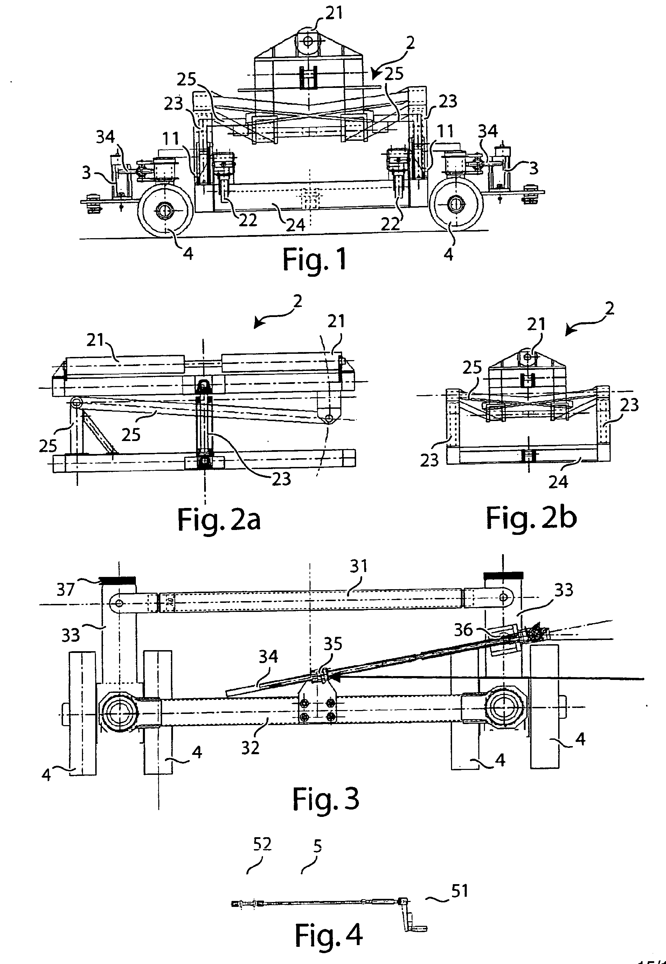

Making reference to figure 1, it is possible observing the loading assembly 1. It provides some means assembled in such a way to make it easily transportable the same system.

Analysing more specifically figures 1, 2, 3 and 4, it is possible to observe the loading system 1. The various parts of the system can be isolated. Particularly, it is possible to observe the lifting device 2, provided at the top with one or more rolls 21, and with retractable wheels 22, necessary for its transportation and positioning during the loading phases. Said lifting device 2 also provides two jacks 23. said jacks 23 are placed on a base plane 24, acting on lifting arms 25. Jacks 23 allow the lifting of the rolls 21. Towing hooks 12 are also provided, both frontally and at the rear.

Loading system 1 provides two steering axes 3, the main object of which is that of facilitating manoeuvring during the motion or displacement phases of the loading system 1. Said steering axes 3 has a first axis 31, used as a handle for the operator handling the loading system 1, and a second axis 32, on the side of which the wheel 4 pairs are coupled. A spacer pair 33 couples axes 31 and 32 at the ends.

Said steering axes 3 are provided both for moving the loading system 1, and for moving the container to be loaded, as will be more deeply described in the following. Screws 34 are provided for the steering operations, coupled with worm screws 35, and a coupling 36 for the motion wrenches 5 of the coupling 36. By rotation of the screws 34, they screw on the worm screw, and, according to the screwing direction, move the axes 31 parallel with respect to the axes 32, thus steering the wheels 4.

Finally, bumpers 37 are present on the front part of the steering wheel 3. By these bumpers 37 it is possible approaching a container to the aircraft hold.

In order to better understand the present invention, operation mode of the preferred embodiment of the loading system will be described, the same mode being valid also for other embodiments.

In the following, the various phases for loading a container within an aircraft hold will be described.

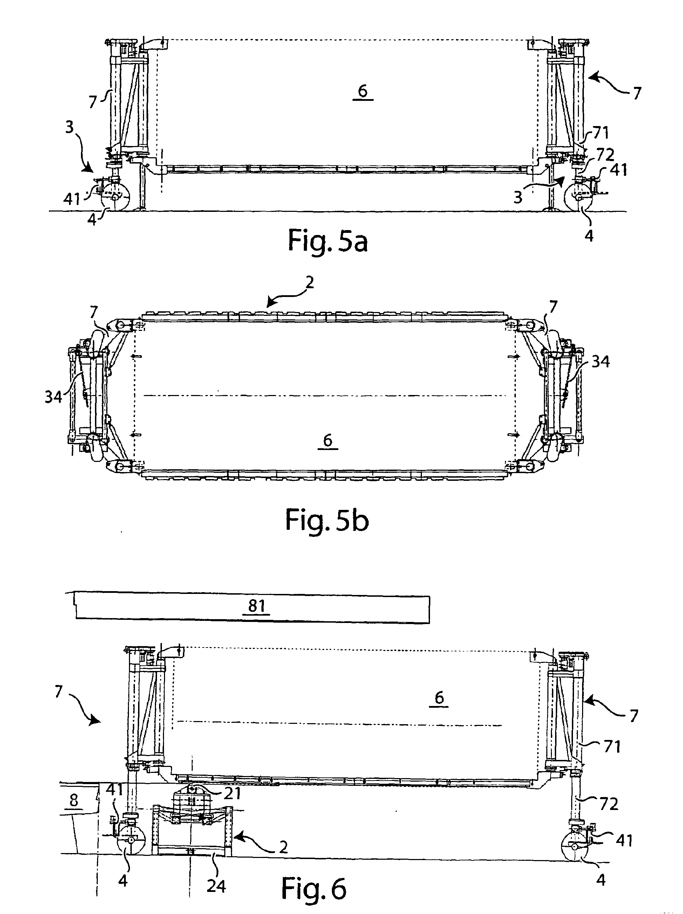

Particularly, in figures 5a and 5b it is possible observing the application of position stabilising elements 7, comprising a pair of cylinders 71 and of corresponding pistons 72, to a container 6. Steering axes 3 are coupled to said position stabilising elements 7, allowing the displacement of the container 6. screws 34 are provided to guide said container 6. Said steering axes 3 provide suitable fixing means 41 close to the wheels 4, and can be detached from the stabilising elements 7.

As first loading operation, container 6, by stabilising elements 7,mounted on the steering axes 3, is approached to the edge 8 of the aircraft hold, with the relevant door open. Approaching is carried out by the wheels 4, and possible misalignment can be corrected by the use of steering axis 3, using the motion wrench 5 to carry out the maneuver.

**Once the container 6 is close to the hold edge 8, the lifting device 2. It can be** easily completed under visibility and safety conditions. Furthermore, by the retractable wheels 22, positioning is very quick. Once the lifting device 2 is positioned, retractable wheels 22 are retracted, allowing to the base 24 of the lifting device 2 to adhere to the ground. Then, jacks 23 are activated, lifting the arms 25 in such a way to couple the roll 21 to the base of the container 6.

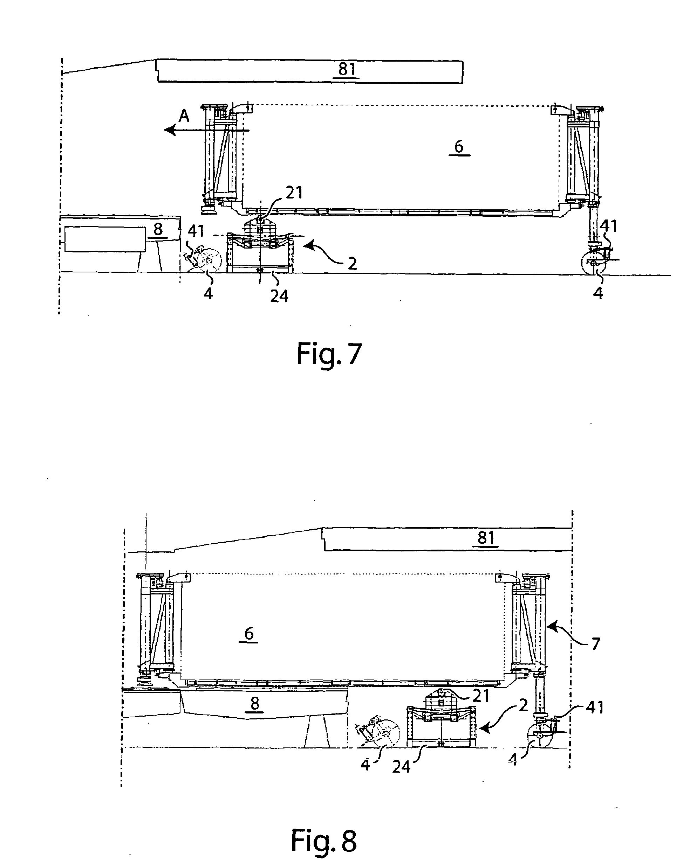

Once the lifting device 2 is fixed, making reference to figure 8, one of the steering axes 3 is released, particularly the one closer to the hold edge 8, deactivating the fixing means 41. Thus, pushing the container 6 according to the direction A, the latter enters within the aircraft hold. The container slides on the rear wheels 4 and on the roll 21 of the lifting device 2. In case of difference in height, lifting device 2 can lift the height of the base of the container 6.

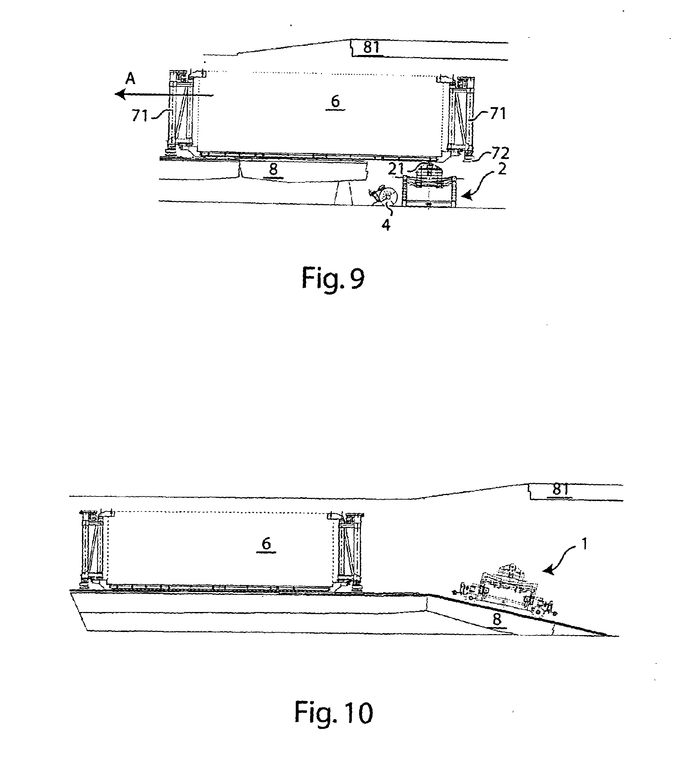

Container 6 is made sliding within the hold, as it is evident from figure 8. Then, also the second steering wheel 3 is separated from the stabilising elements 7. Pistons 72 are introduced again within the cylinders 71, until reaching the configuration of figure 9.

As final phase of the loading, lifting device 2 is extracted, and container 6 is completely introduced within the hold by standard pulling means.

As it can be seen in figure 10, loading system 1 is then assembled again. Thus, it can be used for a new loading operation or it can be fixed within the hold, by fixing hooks, and it can travel along with the goods. In case, it can be used for unloading the goods when the aircraft is arrived.

On the basis of the previous specification, it can be noted that the basic feature is that the loading system according to the present invention provides all the means for loading and unloading goods or containers, and that it can be assembled in such a way to obtain a versatile device, provided with motion means, that can be transported along with the goods.

An advantage obtained by the present invention is that said system is a loading and unloading system with a reduced rolling and a reduced pitching of the container.

A further advantage is that the system can be adapted to each position of the ramp. Thus, it has a great versatility in adapting to the height of the hold or of the loading ramp.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Movable loading system (1), preferably for loading containers on aircrafts, **characterised in that** it comprises at least a lifting device (2) having a resting base (24) and upper sliding means (21); motion means, provided with removable coupling means (41); and means (7) for the stabilisation of the position of said container (6), said position stabilisation means (7) being provided with means (41) for coupling with said container; and **in that**, during the transportation of said movable loading system (1), said lifting device (2) and said motion means are coupled each other by said removable coupling means (41), provided on said motion means, while during the container loading phase, said lifting device (2) and said motion means are separated, and said motion means are coupled by said coupling means to said position stabilisation means (7); said lifting device (2) being provided under said container (6), acting as a support, facilitating the introduction of said container (6) within a loading space, lifting and/or making it sliding along said sliding means (21).

2. Movable loading system (1) according to claim 1, **characterised in that** said sliding means (21) comprise a roll.

3. Movable loading system (1) according to one of the preceding claims, **characterised in that** said lifting device (2) comprises wheels (22), preferably retractable wheels.

4. Movable loading system (1) according to one of the preceding claims, **characterised in that** said lifting device (2) comprises a jack (23), provided with an operation lever.

5. Movable loading system (1) according to one of the preceding claims, **characterised in that** said lifting device (2) comprises, mechanical arms (25).

6. Movable loading system (1) according to one of the preceding claims, **characterised in that** said motion means comprise wheels (4).

7. Movable loading system (1) according to one of the preceding claims, **characterised in that** said motion means comprise means (3) or controlling the direction.

8. Movable loading system (1) according to claim 7, **characterised in that** said direction control means comprise at least a bumpen (37).

9. Movable loading system (1) according to claim 7 or 8, **characterised in that** said direction control means comprise steering axes (3).

10. Movable loading system (1) according to claim 9, **characterised in that** said steering axes (3) comprise at least a worm screw (35) and at least a screw (34), to fix the steering angle.

11. Movable loading system (1) according to claim 9 or 10, **characterised in that** said steering axes (3) comprise a motion wrench (5), suitable to control the steering angle.

12. Movable loading system (1) according to claim 11, **characterised in that** said motion wrench (5) comprises a screw coupling (36) and a handle.

13. Movable loading system (1) according to one of the preceding claims, **characterised in that** said stabilisation means (7) are provided directly on said container (6).

14. Movable loading system (1) according to one of the preceding claims 1 - 12, **characterised in that** said stabilisation means (7) are provided separated from said container (6).

15. Movable loading system (1) according to one of the preceding claims, **characterised in that** said position stabilisation means (7) compnse lifting means.

16. Movable loading system (1) according to claim 15, **characterised in that** said lifting device comprises a cylinder - piston device (71, 72).

## Patentansprüche

1. Bewegbares Verladesystem (1), vorzugsweise zum Verladen von Containern in Flugzeuge, **dadurch gekennzeichnet, dass** es umfasst: zumindest eine Hebevorrichtung (2), die eine Grundplatte (24) und obere Gleitmittel (21) aufweist; Bewegungsmittel, die mit entfernbaren Koppelmitteln (41) versehen sind; und Mittel (7) zum Stabilisieren der Position des Containers (6), wobei die Positions-Stabilisierungsmittel (7) mit Mitteln (41) zum Koppeln mit dem Container versehen sind; und **dadurch**, dass während des Transports des bewegbaren Verladesystems (1) die Hebevorrichtung (2) und die Bewegungsmittel miteinander durch die entfernbaren Koppelmittel (41), die auf den Bewegungsmitteln vorgesehen sind, gekoppelt sind, wohingegen während der Container-Verladephase die Hebevorrichtung (2) und die Bewegungsmittel voneinander getrennt sind und die Bewegungsmittel durch das Koppelmittel mit den Positions-Stabilisierungsmitteln (7) gekoppelt sind; wobei die Hebevorrichtung (2) unter dem Container (6) angeordnet ist, als Stütze dient, das Einführen des Containers (6) in einen Laderaum, ein Anheben und/oder ein Gleitenlassen entlang der Gleitmittel (21) erleichtert.

2. Bewegbares Verladesystem (1) gemäß Anspruch 1, **dadurch gekennzeichnet, dass** die Gleitmittel (21) eine Rolle umfassen.

3. Bewegbares Verladesystem (1) gemäß einem der vorstehenden Ansprüche, **dadurch gekennzeichnet, dass** die Hebevorrichtung (2) Räder (22), bevorzugt einfahrbare Räder, umfasst.

4. Bewegbares Verladesystem (1) gemäß einem der vorstehenden Ansprüche, **dadurch gekennzeichnet, dass** die Hebevorrichtung (2) einen Heber (23) umfasst, der einen Bedienungshebel aufweist.

5. Bewegbares Verladesystem (1) gemäß einem der vorstehenden Ansprüche, **dadurch gekennzeichnet, dass** die Hebevorrichtung (2) mechanische Arme (25) umfasst.

6. Bewegbares Verladesystem (1) gemäß einem der vorstehenden Ansprüche, **dadurch gekennzeichnet, dass** die Bewegungsmittel Räder (4) umfassen.

7. Bewegbares Verladesystem (1) gemäß einem der vorstehenden Ansprüche, **dadurch gekennzeichnet, dass** die Bewegungsmittel Mittel (3) zum Einstellen bzw. Steuern der Richtung umfassen.

8. Bewegbares Verladesystem (1) gemäß Anspruch 7, **dadurch gekennzeichnet, dass** die Richtungs-Steuermittel zumindest einen Stoßdämpfer (37) umfassen.

9. Bewegbares Verladesystem (1) gemäß Anspruch 7 oder 8, **dadurch gekennzeichnet, dass** die Richtungs-Steuermittel Steuerachsen (3) umfassen.

10. Bewegbares Verladesystem (1) nach Anspruch 9, **dadurch gekennzeichnet, dass** die Lenkachsen (3) zumindest eine Wurmschraube (35) und zumindest eine Schraube (34) umfassen, um den Lenk-Winkel festzulegen.

11. Bewegbares Verladesystem (1) gemäß Anspruch 9 oder 10, **dadurch gekennzeichnet, dass** die Lenkachsen (3) einen Lenk-Schlüssel (5) umfassen, der geeignet ist, den Lenk-Winkel einzustellen.

12. Bewegbares Verladesystem (1) gemäß Anspruch 11, **dadurch gekennzeichnet, dass** der Lenk-Schlüssel (5) eine Schrauben-Kopplung (36) und einen Handgriff umfasst.

13. Bewegbares Verladesystem (1) gemäß einem der vorstehenden Ansprüche, **dadurch gekennzeichnet, dass** die Stabilisierungsmittel (7) direkt auf dem Container (6) vorgesehen sind.

14. Bewegbares Verladesystem (1) gemäß einem der vorstehenden Ansprüche 1 bis 12, **dadurch gekennzeichnet, dass** die Stabilisierungsmittel (7) von dem Container (6) getrennt vorgesehen sind.

15. Bewegbares Verladesystem (1) gemäß einem der vorstehenden Ansprüche, **dadurch gekennzeichnet, dass** die Positions-Stabilisierungsmittel (7) Hebemittel umfassen.

16. Bewegbares Verladesystem (1) nach Anspruch 15, **dadurch gekennzeichnet, dass** die Hebevorrichtung eine ZylinderKolben-Vorrichtung (71, 72) umfasst.

## Revendications

1. Système mobile de chargement (1), de préférence pour le chargement de conteneurs sur des avions, **caractérisé en ce qu'**il comprend au moins un dispositif de levage (2) ayant une base de support (24) et un moyen de coulissement supérieur (21), des moyens de mouvement prévus avec des moyens de couplage amovibles (41) et des moyens (7) pour la stabilisation de la position dudit conteneur (6), lesdits moyens de stabilisation de position (7) étant munis de moyens (41) pour le couplage avec ledit conteneur et **en ce que** pendant le transport dudit système mobile de chargement (1), ledit dispositif de levage (2) et lesdits moyens de mouvement sont couplés l'un à l'autre par lesdits moyens de couplage amovibles (41) prévus sur lesdits moyens de mouvement, tandis que pendant la phase de chargement du conteneur, ledit dispositif de levage (2) et lesdits moyens de mouvement sont séparés et lesdits moyens de mouvement sont couplés par lesdits moyens de couplage auxdits moyens de stabilisation de position (7), ledit dispositif de levage (2) étant prévu sous ledit conteneur (6), agissant comme un support, facilitant l'introduction dudit conteneur (6) dans un espace de chargement, l'élévation et/ou le rendant coulissant le long desdits moyens de coulissement (21).

2. Système mobile de chargement (1) selon la revendication 1, **caractérisé en ce que** lesdits moyens de coulissement (21) comportent un rouleau.

3. Système mobile de chargement (1) selon l'une des revendications précédentes, **caractérisé en ce que** ledit dispositif de levage (2) comprend des roues (22), de préférence des roues rétractables.

4. Système mobile de chargement (1) selon l'une des revendications précédentes, **caractérisé en ce que** ledit dispositif de levage (2) comprend un vérin (23) muni d'un levier d'actionnement.

5. Système mobile de chargement (1) selon l'une des revendications précédentes, **caractérisé en ce que** ledit dispositif de levage (2) comprend des bras mécaniques (25).

6. Système mobile de chargement (1) selon l'une des revendications précédentes, **caractérisé en ce que** lesdits moyens de mouvement comportent des roues (4).

7. Système mobile de chargement (1) selon l'une des revendications précédentes, **caractérisé en ce que** lesdits moyens de mouvement comportent des moyens (3) pour la commande de direction.

8. Système mobile de chargement (1) selon la revendication 7, **caractérisé en ce que** lesdits moyens de commande de direction comportent au moins un dispositif d'arrêt (37).

9. Système mobile de chargement (1) selon la revendication 7 ou 8, **caractérisé en ce que** lesdits moyens de commande de direction comportent des axes de conduite (3).

10. Système mobile de chargement (1) selon la revendication 9, **caractérisé en ce que** lesdits axes de conduite (3) comportent au moins une vis sans fin (35) et au moins une vis (34) pour fixer l'angle de conduite.

11. Système mobile de chargement (1) selon la revendication 9 ou 10, **caractérisé en ce que** lesdits axes de conduite (3) comportent une clé de mouvement (5) appropriée pour commander l'angle de conduite.

12. Système mobile de chargement (1) selon la revendication 11, **caractérisé en ce que** ladite clé de mouvement (5) comporte un couplage de vis (36) et une poignée.

13. Système mobile de chargement (1) selon l'une des revendications précédentes, **caractérisé en ce que** lesdits moyens de stabilisation (7) sont prévus directement sur ledit conteneur (6).

14. Système mobile de chargement (1) selon l'une des revendications précédentes 1 à 12, **caractérisé en ce que** lesdits moyens de stabilisation (7) sont prévus séparés dudit conteneur (6).

15. Système mobile de chargement (1) selon l'une des revendications précédentes, **caractérisé en ce que** lesdits moyens de stabilisation de position (7) comportent les moyens de levage.

16. Système mobile de chargement (1) selon la revendication 15, **caractérisé en ce que** ledit dispositif de levage comprend un dispositif cylindre-piston (71, 72).
